(19) Europäisches Patentamt
European Patent Office
Office européen des brevets

(11) EP 4 772 555 A1

(12) EUROPEAN PATENT APPLICATION
published in accordance with Art. 153(4) EPC

(43) Date of publication:
08.07.2026 Bulletin 2026/28

(21) Application number: 24859755.1

(22) Date of filing: 27.08.2024

(51) International Patent Classification (IPC):
*C08G 18/40* (2006.01) *C08G 18/44* (2006.01)
*C08G 18/48* (2006.01) *C08G 101/00* (2006.01)

(52) Cooperative Patent Classification (CPC):
**C08G 18/40; C08G 18/44; C08G 18/48;**
C08G 2101/00

(86) International application number:
**PCT/JP2024/030451**

(87) International publication number:
**WO 2025/047723 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.08.2023 JP 2023138464**
**09.08.2024 JP 2024134221**

(71) Applicant: **Canon Kabushiki Kaisha**
**Tokyo 146-8501 (JP)**

(72) Inventors:
- **KOMATSU, Hiroaki**
**Tokyo 146-8501 (JP)**
- **NOMURA, Shotaro**
**Tokyo 146-8501 (JP)**
- **UEMATSU, Atsushi**
**Tokyo 146-8501 (JP)**
- **NISHIOKA, Satoru**
**Tokyo 146-8501 (JP)**
- **SEGAWA, Shota**
**Tokyo 146-8501 (JP)**

(74) Representative: **TBK**
**Bavariaring 4-6**
**80336 München (DE)**

# (54) POLYURETHANE ELASTOMER AND POLYURETHANE MOLDED BODY

(57) Provided is a polyurethane elastomer which has a matrix and a plurality of domains dispersed in the matrix, the polyurethane elastomer being characterized in that, in a specific molded body thereof, the number of included domains is 10 to 77,000, the arithmetic mean value of the sphere equivalent diameters of the domains is 1.0 μm to 30.0 μm, the ratio of the total volume of the domains is 15 vol% to 45 vol%, the relationship between a parameter A indicating the viscoelastic term of the domains and a parameter B indicating the viscoelastic term of the matrix is A < B, the microrubber hardness and the strain at 5 seconds after unloading are each within a specific range, and if C (mass %) and D (mass %) are respective ratios of the mass of an extract E1 and the mass of an extract E2, D/C is 1.0 to 5.0.

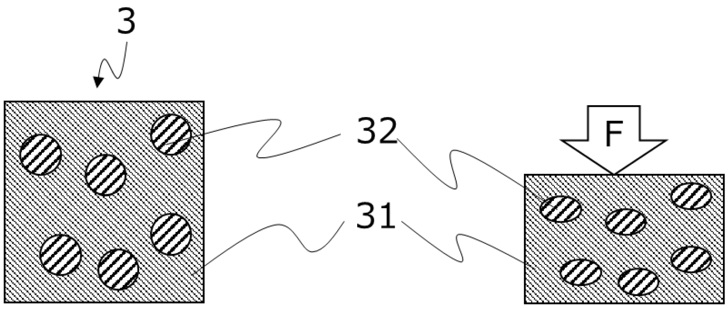


FIG. 1A FIG. 1B



Processed by Luminess, 75001 PARIS (FR)

## Description

[Technical field]

The present disclosure relates to a polyurethane elastomer and a polyurethane molded article.

[Background Art]

Polyurethane elastomers are used in a wide range of applications such as artificial and synthetic leathers, paints, coating agents, and adhesives. Generally, polyurethane elastomers are composed of reaction products of a polyisocyanate and a polyol and are constituted by hard segments derived from the polyisocyanate and soft segments derived from the polyol.

Polyols, which are one of the raw materials for polyurethane elastomers, are classified into polyether polyols, polyester polyols, and polycarbonate polyols, based on differences in molecular chain structure, and the type of polyol is selected based on the required performance. Polyurethane elastomers with a polycarbonate structure, which are obtained from polycarbonate polyols as raw materials, have excellent abrasion resistance. Furthermore, the polyurethane elastomers are known to have superior heat resistance, weather resistance, and hydrolysis resistance in comparison with polyurethane elastomers having polyether or polyester structures.

Meanwhile, in polyurethane elastomers with polycarbonate structures, strong intermolecular forces act between the polycarbonate structures, causing a significant increase in hardness of polyurethane elastomers. For this reason, polyurethane elastomers with polycarbonate structures are difficult to be used in applications requiring low hardness.

Patent Document 1 discloses a polyurethane elastomer containing a matrix phase and a domain phase dispersed within the matrix phase, with the matrix phase containing repeating structural units derived from a polycarbonate diol, and the domain phase containing repeating structural units derived from a polyether.

[Citation List]

[Patent Document]

[Patent Document 1] Japanese Patent Laid-Open No. 2022-168829

[Summary of Invention]

[Technical Problem]

The polyurethane elastomer disclosed in Patent Document 1 makes it possible to implement a combination of low hardness and abrasion resistance comparable to those of silicone elastomers, as well as a combination of low hardness and low compression set. However, the inventors have discovered that when a molded article containing this polyurethane elastomer is, for example, a component that is expected to be in compressed contact with another component for an extended period of time, e.g., a gripper in a robot chuck, substances exuding from the molded article may adhere to the contact object.

At least one embodiment of the present disclosure is directed to providing a polyurethane elastomer providing a molded article that is flexible yet exhibits small compressive strain and that does not generate exudates adhering to other components even when pressed against them. At least one other embodiment of the present disclosure is directed to providing a molded article that is flexible yet exhibits small compression set and that does not generate exudates adhering to other components even when pressed against them.

[Solution to Problem]

At least one embodiment of the present disclosure provides a polyurethane elastomer having a matrix and a plurality of domains dispersed within the matrix, wherein in a first molded article composed of the polyurethane elastomer and having a cubic shape with one side measuring 100 μm, the number N of the domains comprised is 10 to 77,000; an arithmetic mean value Da of sphere-equivalent diameters of the domains is 1.0 to 30.0 μm; a proportion V of a total volume of the domains in the first molded article is 15 to 45% by volume; in a cross section parallel to one surface of the first molded article, a relationship between parameter A indicating a viscoelasticity term of the domains and parameter B indicating a viscoelasticity term of the matrix, as measured in a viscoelastic image, taken with a scanning probe microscope, is $A < B$; a micro rubber hardness, at a temperature of 23°C, of a second molded article composed of the polyurethane elastomer is 20 to 50 degrees, in an indentation test of the second molded article using a nanoindenter at a temperature of 23°C, when a

Vickers indenter is pressed into the second molded article at a loading rate of 10 mN/30 sec, a load of 10 mN is maintained for 60 sec, and then the load is released, a strain 5 sec after the load is released is not more than 1.0 μm; when a third molded article composed of the polyurethane elastomer is subjected to Soxhlet extraction at an extraction temperature of 80°C for an extraction time of 4 h in accordance with Japanese Industrial Standard (JIS) K6229:2015 by using acetone as an extraction solvent, and a ratio of a mass of a resulting extract E1 to a mass of the third molded article is taken as C (% by mass), and when a powder of the third molded article with a mode diameter of less than 1 μm is subjected to Soxhlet extraction at an extraction temperature of 80°C for an extraction time of 4 h in accordance with Japanese Industrial Standard (JIS) K6229:2015 by using acetone as an extraction solvent, and a ratio of a mass of a resulting extract E2 to a mass of the powder is taken as D (% by mass), D/C is 1.0 to 5.0.

At least one embodiment of the present disclosure provides a polyurethane molded article comprising the polyurethane elastomer of the present disclosure.

[Advantageous Effects of Invention]

According to at least one embodiment of the present disclosure, a polyurethane elastomer can be obtained that is flexible yet exhibits small compressive strain and that does not generate exudates adhering to other components even when pressed against them. Furthermore, according to at least one embodiment of the present disclosure, a molded article can be obtained that is flexible yet exhibits small compression set and that does not cause exudates to adhere to other members even when pressed against them.

[Brief Description of the Drawings]

FIG. 1 is an explanatory drawing illustrating deformation of a urethane elastomer according to the present disclosure.
FIG. 2 is a schematic explanatory drawing illustrating a method for producing a urethane elastomer according to one embodiment of the present disclosure.
FIG. 3 is a schematic explanatory drawing illustrating a method for producing a urethane elastomer according to one embodiment of the present disclosure.

[Description of Embodiments]

In the present disclosure the notations "from XX to YY" and "XX to YY" representing a numerical value range signify, unless otherwise specified, a numerical value range that includes the lower limit and the upper limit of the range, as endpoints. In a case where numerical value ranges are described in stages, the upper limits and the lower limits of the respective numerical value ranges can be combined arbitrarily. In the present disclosure, for instance, a wording such as "at least one selected from the group consisting of XX, YY and ZZ" encompasses XX, YY and ZZ, a combination of XX and YY, a combination of XX and ZZ, a combination of YY and ZZ, and a combination of XX, YY and ZZ. In the case where XX represents a group, a plurality of members may be selected from XX, and the same is true for YY and ZZ.

To evaluate the degree of exudation from a molded article of polyurethane elastomer according to Patent Document 1, the inventors conducted a solvent extraction test on a polyurethane elastomer having a matrix and a plurality of domains dispersed within the matrix. Specifically, a molded article composed of the polyurethane elastomer according to Patent Document 1 and measuring 25 mm in length, 10 mm in width, and 2 mm in thickness, was subjected to Soxhlet extraction in accordance with Japanese Industrial Standard (JIS) K6229:2015 at an extraction temperature of 80°C for an extraction time of 4 h by using acetone as an extraction solvent, and the ratio C of the mass of the resulting extract to the mass of the molded article (hereinafter also referred to as the solvent extraction ratio) was evaluated. It was thought that a low solvent extraction ratio C corresponds to low exudation from the molded article and makes it possible to reduce adhesion to the contact object. As a result, the solvent extraction ratio C from the molded article of the polyurethane elastomer according to Patent Document 1 was sufficiently low. However, when the molded article of the polyurethane elastomer according to Patent Document 1 was maintained in contact with another object for an extended period of time, as described above, the exudation could generate substances adhering to the other object.

Next, the inventors pulverized the molded article of the polyurethane elastomer according to Patent Document 1 to obtain a powder with a mode diameter of not more than 1 μm, subjected the powder to a solvent extraction test in the same manner as described above, and evaluated the ratio of the mass of the extract to the mass of the powder (solvent extraction ratio D). As a result, the solvent extraction ratio D was such that approximately half of the mass of the loaded components constituting the domains of the molded article was extracted. Based on this result, it was established that the exudates from the molded article of the polyurethane elastomer according to Patent Document 1 that were observed when the article was kept under compression for an extended period of time are primarily derived from the domains. The

domains, in this case, impart a hardness reducing function to the polyurethane according to Patent Document 1 (paragraph 0018 of Patent Document 1).

Accordingly, the inventors recognized that in order to address the issue of suppressing exudation from the domains of a molded article of the polyurethane according to Patent Document 1 when the article is compressed for an extended period of time, it is essential to reduce the ratio of the solvent extraction ratio D to the solvent extraction ratio C (hereinafter, also referred to simply as "D/C") while maintaining the high flexibility and small compression set exhibited by the molded article of the polyurethane elastomer according to Patent Document 1.

Based on this recognition, the inventors conducted extensive research to reduce the D/C ratio without compromising the compatibility of low hardness and abrasion resistance, and the compatibility of low hardness and low compression set. As a result, it was found that a polyurethane elastomer having the following configuration contributes to achieving the above-mentioned objective.

That is, a polyurethane elastomer according to one embodiment of the present disclosure has a matrix and a plurality of domains dispersed within the matrix. In a first molded article composed of the polyurethane elastomer and having a cubic shape with one side measuring 100 $\mu$m, the number N of the domains contained is 10 to 77,000. An arithmetic mean value Da of a sphere-equivalent diameter of the domains is 1.0 $\mu$m to 30.0 $\mu$m, a proportion V of a total volume of the domains in the first molded article is 15% by volume to 45% by volume, and in a cross section parallel to one surface of the first molded article, a relationship between parameter A indicating a viscoelasticity term of the domains and parameter B indicating a viscoelasticity term of the matrix, as measured in a viscoelastic image, taken with a scanning probe microscope, is $A < B$. Furthermore, a micro rubber hardness, at a temperature of 23°C, of a second molded article composed of the polyurethane elastomer is 20 degrees to 50 degrees, and in an indentation test of the second molded article using a nanoindenter at a temperature of 23°C, when a Vickers indenter is pressed into the second molded article at a loading rate of 10 mN/30 sec, a load of 10 mN is maintained for 60 sec, and then the load is released, a strain 5 sec after the load is released is not more than 1.0 $\mu$m. Furthermore, when a third molded article composed of the polyurethane elastomer is subjected to Soxhlet extraction at an extraction temperature of 80°C for an extraction time of 4 h in accordance with Japanese Industrial Standard (JIS) K6229:2015 by using acetone as an extraction solvent, and a ratio of a mass of a resulting extract E1 to a mass of the third molded article is taken as C (% by mass), and when a powder of the third molded article with a mode diameter of less than 1 $\mu$m is subjected to Soxhlet extraction at an extraction temperature of 80°C for an extraction time of 4 h in accordance with Japanese Industrial Standard (JIS) K6229:2015 by using acetone as an extraction solvent, and a ratio of a mass of a resulting extract E2 to a mass of the powder is taken as D (% by mass), D/C is 1.0 to 5.0.

The polyurethane elastomer etc. of the present disclosure will be described hereinbelow in detail with reference to the preferred embodiments and by using the appended drawings. The embodiments described below are merely examples, and unless otherwise specified, the present disclosure is not limited to these embodiments.

The polyurethane elastomer satisfies the following requirements (1-1) to (1-4). Requirement (1-1): The polyurethane elastomer has a matrix and a plurality of domains dispersed within the matrix. Requirement (1-2): The relationship between parameter A indicating the viscoelasticity term of the domains and parameter B indicating the viscoelasticity term of the matrix, as measured in a viscoelastic image, taken with a scanning probe microscope, in a cross section parallel to one surface of a first molded article composed of the polyurethane elastomer and having a cubic shape with one side measuring 100 $\mu$m, is $A < B$. In other words, the matrix-domain structure of the polyurethane elastomer is observed in the cross section parallel to one surface of the molded article. The elastic modulus of the polyurethane elastomer matrix observed in the cross section is greater than the elastic modulus of the domains.

Requirement (1-3): The micro rubber hardness, at a temperature of 23°C, of the second molded article composed of the polyurethane elastomer is 20 degrees to 50 degrees. Requirement (1-4): In an indentation test of the second molded article using a nanoindenter at a temperature of 23°C, when a Vickers indenter is pressed into the second molded article at a loading rate of 10 mN/30 sec, a load of 10 mN is maintained for 60 sec, and then the load is released, a strain 5 sec after the load is released is not more than 1.0 $\mu$m.

In the polyurethane elastomer, the matrix is imparted with the function of recovering from deformation. Furthermore, the domains are imparted with the function of reducing the hardness of the polyurethane elastomer. Such a polyurethane elastomer exhibits both softness and rapid recovery from deformation. Meanwhile, typical polyurethane elastomers also have a difference in elastic modulus between the so-called hard segments and soft segments. However, in typical urethane elastomers, the soft segments constitute the matrix, and the hard segments constitute the domains. It is believed that no polyurethane elastomers exist that exhibit the fast recovery rate from deformation relating to the stipulations of requirement (1-4) while retaining the flexibility relating to requirement (1-3).

FIG. 1A is a cross-sectional view of a polyurethane molded article 3 according to one embodiment of the present disclosure. FIG. 1A schematically illustrates a matrix 31 of the polyurethane elastomer and a plurality of domains 32 dispersed within the matrix 31, as observed on a cross section parallel to one surface of the molded article. As described above, the polyurethane elastomer has the matrix 31 and the domains 32 dispersed within the matrix. In other words, the urethane elastomer has a matrix-domain structure. The matrix exhibits higher elasticity than the domains.

FIGS. 1A and 1B are explanatory diagrams of the recovery from deformation of the polyurethane molded article 3

according to one embodiment of the present disclosure. As shown in FIG. 1A, a plurality of domains 32 is dispersed within the matrix 31. Because the domains 32 have lower elasticity than the matrix 31, when the polyurethane molded article 3 is compressed in the direction of arrow F, as shown in FIG. 1B, the domains 32 deform preferentially. Therefore, even if the matrix 31 has high elasticity, the micro rubber hardness of the polyurethane molded article can be reduced. Furthermore, when the polyurethane molded article is released from compression, the elasticity of the matrix 31, which is the continuous phase, allows the thickness of the molded article to quickly return to the pre-compression thickness.

Number N of Domains

In the first molded article composed of the polyurethane elastomer and having a cubic shape with one side measuring 100 μm, the number N of domains contained in the first molded article is 10 to 77,000. The number N of domains can be 100 to 77,000, or even 700 to 77,000. By keeping the number N of domains within these ranges, a polyurethane elastomer is obtained that is flexible yet exhibits small compressive strain. Furthermore, the number N of domains can be adjusted by adjusting the mixing conditions (shear force and time) during urethane prepolymer preparation or the molecular weight and amount of polyol and polyisocyanate added.

The number N of domains can be determined by three-dimensional measurement of the first molded article using an FIB-SEM. A heat-cured polyurethane elastomer may be used as-is as the first molded article, or a heat-cured polyurethane elastomer processed into a predetermined shape using a microtome may be used as the first molded article.

FIB-SEM is a technique in which a sample is processed using a focused ion beam (FIB) device and the exposed cross section of the sample is observed using a scanning electron microscope (SEM). To examine a three-dimensional structure, numerous photographs are taken by repeating continuous processing and observation, and then these SEM images are reconstructed in 3D using computer software. Reconstructing the sample structure as a three-dimensional stereo image makes it possible to examine the stereo structure. The specific method for measuring the number N of domains is to use an FIB-SEM (manufactured by FEI, Inc.) to acquire three-dimensional stereo images of the first molded article at 60 nm intervals. The number N of domains is then calculated for the obtained images using 3D visualization and analysis software Avizo (registered trademark, manufactured by FEI, Inc.). A more specific measurement method is described below.

Arithmetic Mean Value Da of Sphere-Equivalent Diameter of Domains

In a first molded article composed of the polyurethane elastomer and having a cubic shape with a side measuring 100 μm, the arithmetic mean value Da of sphere-equivalent diameters of the domains is 1.0 μm to 30.0 μm. The arithmetic mean value Da may be 2.0 μm to 20.0 μm, or 2.0 μm to 15.0 μm. By keeping the arithmetic mean value Da within these ranges, a polyurethane elastomer is obtained that is flexible yet exhibits small compressive strain. The arithmetic mean value Da can be adjusted by adjusting the mixing conditions (shear force and time) during urethane prepolymer preparation or the molecular weight and amount of polyol and polyisocyanate added.

The arithmetic mean value Da can be determined by three-dimensionally measuring the first molded article using the FIB-SEM described above. A specific measurement method is described below.

Proportion V of Total Volume of Domains in First Molded Article

In the first molded article composed of the polyurethane elastomer and having a cubic shape with one side measuring 100 μm, the proportion V of the total volume of the domains in the first molded article is 15% by volume to 45% by volume. Furthermore, the proportion V of the total volume of the domains in the first molded article may be 20% by volume to 45% by volume, 25% by volume to 42% by volume, and preferably 25% by volume to 41% by volume. By keeping the proportion V of the total volume of the domains in the first molded article within the above ranges, a polyurethane elastomer is obtained that is flexible yet exhibits small compressive strain. Furthermore, the proportion V of the total volume of the domains in the first molded article can be adjusted by adjusting the mixing conditions (shear force and time) during urethane prepolymer preparation or the molecular weight and amount of polyol and polyisocyanate added.

The proportion of the total volume of the domains in the first molded article can be determined by three-dimensionally measuring the first molded article using the FIB-SEM described above. A specific measurement method is described below.

Parameters Indicating Viscoelasticity Terms

In the first molded article composed of the polyurethane elastomer and having a cubic shape with one side measuring 100 μm, in a cross section parallel to one surface of the first molded article, the relationship between parameter A indicating the viscoelasticity term of the domains and parameter B indicating the viscoelasticity term of the matrix, as

measured in a viscoelastic image, taken with a scanning probe microscope, is A < B. In other words, the elastic modulus of the polyurethane elastomer matrix observed on the cross section is greater than the elastic modulus of the domains. This makes it easier to achieve both hardness and recovery from deformation.

The difference in the relative elastic moduli between the matrix 31 and the domain 32 can be determined by cutting the first molded article to obtain a thin slice and measuring with a scanning probe microscope (SPM/AFM). An example of a scanning probe microscope that can be used is the "S-Image" (product name) manufactured by Hitachi High-Tech Science Corporation. Furthermore, examples of means for slicing include a sharp razor, a microtome, and focused ion beam (FIB) techniques. In the present disclosure, a microtome is used.

The place for preparing a slice is at a freely selected cut surface parallel to one surface of the 100 μm-side cubic first molded article. The observation area for the viscoelastic image on the cut surface is a freely selected 50 μm square area.

The measurement mode for the viscoelastic image using the SPM is the micro viscoelastic dynamic force mode (VE-DFM). Furthermore, a silicon microcantilever for DMF ("SI-DF3" (product name), manufactured by Hitachi High-Tech Science Corporation, spring constant = 1.9 N/m) is used. The scanning frequency is 0.5 Hz. VE-DFM is one of the measurement modes of an SPM (scanning probe microscope). With VE-DFM, surface topography images can be obtained while controlling the distance between the probe and the measurement sample so as to maintain constant cantilever vibration and amplitude in a state in which the cantilever is caused to resonate.

After acquiring a viscoelastic image, parameters indicating the viscoelasticity terms are calculated for each observation region, 10 for the matrix and 10 for the domains. The arithmetic mean values thereof are used as parameter A indicating the viscoelasticity term of the domains and parameter B indicating the viscoelasticity term of the matrix. Parameters A and B are measured in mV, and larger values indicate higher elasticity.

The ratio of parameter A to parameter B (A/B) is preferably not more than 0.65, but may also be not more than 0.50, or not more than 0.40. The smaller the A/B ratio, the greater the difference in viscoelasticity between the matrix and domains, making it easier to achieve both hardness and recovery from deformation. There is no particular lower limit to the A/B ratio, but the smaller the ratio, the better. Specifically, for example, the ratio is 0.10. For example, A/B is preferably 0.10 to 0.65, 0.10 to 0.50, or 0.10 to 0.40.

Parameters A and B can be adjusted, for example, by changing the elastic modulus of the domains and matrix. The elastic modulus of the matrix can be adjusted by the molecular weight, bonding species, and addition amount of the polyol or polyisocyanate. The elastic modulus of the domains can be adjusted by the molecular weight, bonding species, and addition amount of the polyol or polyisocyanate, or by adding a chain extender such as a polyhydric alcohol.

The value of parameter A is not particularly limited, but may be, for example, 50 mV to 120 mV or 60 mV to 110 mV. Furthermore, the value of parameter B is not particularly limited, but may be, for example, 190 mV to 310 mV or 210 mV to 290 mV.

Micro Rubber Hardness of Molded Article

The micro rubber hardness of the second molded article, which is composed of polyurethane elastomer, at a temperature of 23°C is 20 degrees to 50 degrees. Here, the second molded article is a cubic molded article with one side measuring 2 mm. If the sample thickness is less than 2 mm, a cubic second molded article with one side measuring 2 mm is obtained by stacking in the thickness direction. A micro rubber hardness of not more than 50 degrees results in good flexibility and low hardness. A micro rubber hardness of at least 20 degrees results in high mechanical strength and good abrasion resistance. The micro rubber hardness is preferably 25 degrees to 50 degrees, and more preferably 30 degrees to 50 degrees.

Micro rubber hardness can be adjusted by adjusting the elastic modulus of the matrix, the proportion of the matrix to domains, etc. Specifically, increasing the elastic modulus of the matrix increases the micro rubber hardness.

Micro rubber hardness is determined in the following manner. The measurement point is approximately the center of a freely selected surface of the cubic second molded article with one side measuring 2 mm, and the micro hardness is measured at a temperature of 23°C using a micro hardness tester (product name: MD-1capa; manufactured by Kobunshi Keiki Co., Ltd.; indenter: Type A (cylindrical, diameter 0.16 mm, height 0.5 mm, outer diameter 4 mm, inner diameter 1.5 mm); measurement mode: peak hold mode). When the sample thickness is less than 2 mm, the measurement point is approximately the center of one surface of the second molded article where the micro hardness can be measured from the thickness direction of the second molded article sample.

Furthermore, the second molded article may be made from a heat-cured polyurethane elastomer as is, or the heat-cured polyurethane elastomer may be cut into the desired shape using scissors to form the second molded article.

Recovery from Deformation

In an indentation test of the second molded article using a nanoindenter at a temperature of 23°C, when a Vickers

indenter is pressed into the second molded article at a loading rate of 10 mN/30 sec, a load of 10 mN is maintained for 60 sec, and then the load is released and a strain 5 sec after the load is released is not more than 1.0 μm. The strain 5 sec after the load is released is preferably not more than 0.8 μm, more preferably not more than 0.7 μm, and even more preferably not more than 0.6 μm. The lower limit of the strain 5 sec after the load is released is not particularly limited, but is typically 0.0 μm, and may be 0.1 μm. Examples of preferred values include 0.0 μm to 1.0 μm, 0.0 μm to 0.8 μm, 0.0 μm to 0.7 μm, and 0.1 μm to 0.6 μm.

By keeping the strain 5 sec after the load is released within the above range, the polyurethane elastomer exhibits a fast recovery rate from deformation.

The strain 5 sec after the load is released can be adjusted by adjusting the type of matrix resin, the number of domains, and the domain size.

The value of the strain 5 sec after the load is released is determined as follows. The measurement point is approximately the center of a freely selected surface of a cubic second molded article with one side measuring 2 mm. An indentation test is performed at a temperature of 23°C using a nanoindenter (product name: Fischerscope HM2000, manufactured by Fischer Instruments, a square pyramidal Vickers indenter with an opposing angle of 136°). The Vickers indenter is pressed into the second molded article at a loading rate of 10 mN/30 sec, and the load of 10 mN is maintained for 60 sec. The load is then released at 10 mN/30 sec, and the value of the strain 5 sec after the load is released is measured.

Furthermore, the second molded article may be made from a heat-cured polyurethane elastomer as is, or the heat-cured polyurethane elastomer may be cut into the desired shape using scissors to form the second molded article.

Solvent Extraction Ratio C and Powder Solvent Extraction Ratio D

When a third molded article composed of the polyurethane elastomer is subjected to Soxhlet extraction at an extraction temperature of 80°C for an extraction time of 4 h in accordance with Japanese Industrial Standard (JIS) K6229:2015 by using acetone as an extraction solvent, and the ratio of the mass of a resulting extract E1 to the mass of the third molded article is taken as C (% by mass), and when a powder of the third molded article with a mode diameter of less than 1 μm is subjected to Soxhlet extraction at an extraction temperature of 80°C for an extraction time of 4 h in accordance with Japanese Industrial Standard (JIS) K6229:2015 by using acetone as an extraction solvent, and the ratio of the mass of a resulting extract E2 to the mass of the powder is taken as D (% by mass), D/C is 1.0 to 5.0. Here, the third molded article is 25 mm in length, 10 mm in width, and 2 mm in thickness. Furthermore, D/C is preferably 1.5 to 4.5, and more preferably 1.5 to 3.0.

As mentioned above, by ensuring that the D/C ratio is within the above range, a polyurethane elastomer can be obtained that is flexible yet exhibits small compressive strain and that does not generate exudates adhering to other components even when pressed against them. D/C can be adjusted by adjusting the value of C or by adjusting the value of D by the methods described hereinbelow.

Solvent Extraction Ratio C

The solvent extraction ratio C of a polyurethane elastomer is determined by Soxhlet extraction.

First, the polyurethane elastomer is molded into a molded article using a mold for producing 2 mm thick sheets. Then, the molded article is cut with scissors into a piece 25 mm in length, 10 mm in width, and 2 mm in thickness to obtain the third molded article. Where the sample thickness is less than 2 mm, enough samples are prepared to form a 2 mm thick layer when stacked, and the samples are stacked to form a 2 mm thick layer. Then, the third molded article is subjected to Soxhlet extraction at an extraction temperature of 80°C for an extraction time of 4 h in accordance with Japanese Industrial Standard (JIS) K6229:2015 by using acetone as an extraction solvent. The ratio of the mass of the resulting extract E1 to the mass of the third molded article is calculated as the solvent extraction ratio C (% by mass).

The value of the solvent extraction ratio C is not particularly limited, but is preferably 2.2% by mass to 4.5% by mass, more preferably 2.3% by mass to 3.5% by mass, and even more preferably 2.3% by mass to 3.0% by mass. Keeping this value within the above ranges makes it easier to achieve the D/C value within the above range. The value of the solvent extraction ratio C can be adjusted by the type and amount of catalyst added, as well as the type of matrix resin.

Solvent Extraction Ratio D of Powder

The solvent extraction ratio D of powder is determined by Soxhlet extraction.

First, the polyurethane elastomer is molded into a molded article using a mold for producing 2 mm thick sheets. Then, the molded article is cut with scissors into a piece 25 mm in length, 10 mm in width, and 2 mm in thickness to obtain the third molded article. The third molded article is then pulverized while sandwiched between filter paper to obtain a powder, and the solvent extraction ratio D of the powder is determined in the same manner as for solvent extraction ratio C described hereinabove. Examples of pulverizing methods include freeze pulverizing and pulverizing using a press;

however, pulverizing using a press with filter paper is preferred because it is easier to fix viscous materials.

As a specific pulverization method, the third molded article described above is sandwiched between two sheets of Kiriyama funnel filter paper 5B, which is then sandwiched between two degreased aluminum sheets, and pressed at 10 MPa for 1 min using a 50-ton press (product name: PEF 5041, manufactured by Kansai Roll Co., Ltd.) preheated to 130°C. After the load is released, the aluminum sheets are removed, and the pulverized third molded article sandwiched between the two sheets of Kiriyama funnel filter paper is folded and placed in a Soxhlet cylindrical filter paper. The solvent extraction ratio D of the powder is determined in the same manner as for solvent extraction ratio C above.

To determine the mode diameter of the powder, a laser diffraction/scattering particle size distribution analyzer is used, as it is compatible with dry methods and allows for simple measurements.

Specifically, a laser diffraction/scattering particle size distribution analyzer (product name: Partica LA-960V2, manufactured by Horiba, Ltd.) equipped with a dry measurement unit is used to measure the particle size distribution and determine the particle diameter (mode diameter) showing the maximum peak. The mode diameter indicates the size of the pulverized product.

The value of the solvent extraction ratio D of the powder is not particularly limited, but is preferably 3.0% by mass to 20.0% by mass, more preferably 4.0% by mass to 17.0% by mass, even more preferably 4.3% by mass to 11.0% by mass, and particularly preferably 4.3% by mass to 7.0% by mass. Keeping this value within the above ranges makes it easier to achieve the D/C value within the above range.

The value of the solvent extraction ratio D of the powder can be adjusted by changing the type and amount added of chain extender (e.g., polyhydric alcohol) and catalyst.

The number-average molecular weight of extract E2 obtained by Soxhlet extraction of a powder obtained in a similar manner to that used to determine the solvent extraction ratio D of the powder is preferably 2000 to 100,000, more preferably 2500 to 100,000, and even more preferably 5000 to 100,000. Within the above ranges, a polyurethane elastomer is obtained that is flexible yet exhibits small compressive strain. Furthermore, the number-average molecular weight of extract E2 can be adjusted by changing the material that constitutes the domains. A method for measuring the number-average molecular weight of extract E2 is described below.

The number-average molecular weight of extract E2 may be, for example, 2000 to 50,000, or 2500 to 30,000.

The viscosity of extract E2 obtained by Soxhlet extraction of the powder obtained in a similar manner to that used to determine the solvent extraction ratio D of the powder is preferably not more than 10,000 mPa·s. There is no particular lower limit, but for example, a viscosity of 1000 mPa·s to 10,000 mPa·s is preferred, 1200 to mPa·s to 10,000 mPa·s is more preferred, and 2000 mPa·s to 10,000 mPa·s is even more preferred. By keeping the viscosity within these ranges, a polyurethane elastomer that is flexible yet has small compressive strain can be obtained. Furthermore, the viscosity of extract E2 can be adjusted by changing the material that makes up the domains. The method for measuring the viscosity of extract E2 is described below.

(Abrasion Resistance)

When a ball-on-disk abrasion test conforming to JIS R1613:2010 is conducted under the following conditions (1) to (6) on the surface in the thickness direction of a sheet-shaped abrasion test specimen composed of the polyurethane elastomer and measuring 30 mm in length, 30 mm in width, and 2 mm in thickness, a mass loss rate of the abrasion test specimen is preferably not more than 10.0% by mass, more preferably not more than 5.0% by mass, even more preferably not more than 2.0% by mass, still more preferably not more than 1.0% by mass, and particularly preferably not more than 0.5% by mass. Abrasion resistance is improved by satisfying the above ranges.

(1) Ball

Material: stainless steel
Diameter: 10 mm

(2) Load: 100 g
(3) Environment: temperature 23°C, 50% RH
(4) Time: 60 min
(5) Sliding circle diameter: 10 mm
(6) Rotational speed of a disk on which the test specimen is placed: 300 rpm.

The abrasion test is performed in the following manner. First, the mass of the abrasion test specimen is measured. Next, the abrasion test specimen is fixed with a double-sided tape so that the center of the abrasion test specimen is positioned approximately at the center of the sliding disk of a ball-on-disk friction and wear tester (product name: HEIDON Type: 20, manufactured by Shinto Chemical Co., Ltd.). At this time, the surface in the thickness direction of

the abrasion test specimen is placed in contact with the sliding disk. Next, an indenter consisting of the above-mentioned ball is pressed against the center of the abrasion test specimen with a load of 100 g, and the abrasion test specimen is rotated and slid for 60 min with a sliding circle diameter of 10 mm and a rotation speed of 300 rpm. After 60 min, the test is stopped, the wear debris and double-sided tape are removed, and the mass of the test specimen is measured. The mass loss rate (% by mass) is calculated from the mass of the test specimen before and after the abrasion test. Here, the surface in the thickness direction of the abrasion test specimen refers to a 30 mm square surface of the abrasion test specimen measuring 30 mm in length and 30 mm in width.

The mass loss rate of the wear test specimen can be adjusted by adjusting the type of matrix resin, the number of domains, and the domain size.

Polyurethane Elastomer Material

The polyurethane elastomer material will now be described. As previously described, the polyurethane elastomer has the matrix 31 and a plurality of domains 32 dispersed within the matrix. That is, the urethane elastomer has a matrix-domain structure.

Preferably, the matrix 31 has a structure that can increase the rate of recovery from deformation, and the domains 32 have a structure that contributes to suppressing increases in micro rubber hardness.

The matrix 31 of such polyurethane elastomer preferably has a first structure (polycarbonate structure) represented by formula (1). The matrix has at least one polycarbonate structure represented by formula (1), and preferably a plurality thereof. When the matrix has a plurality of polycarbonate structures represented by formula (1), the polycarbonate structure can be a repeating structural unit. Furthermore, the alkylene group having 3 to 9 carbon atoms represented by $R^1$ in the first structure represented by formula (1) may have a linear or branched structure, but a branched structure is more preferable.

[Chem 1]

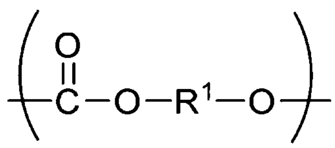

(1)

(In formula (1), $R^1$ represents an alkylene group having 3 to 9 carbon atoms (preferably 6 to 9)).

A polyurethane obtained by reacting a polyol having a polycarbonate structure (polycarbonate polyol) with a polyisocyanate exhibits high elasticity due to the strong intermolecular forces between carbonate groups. Therefore, such polyurethane is a preferred component of the matrix 31.

Furthermore, since $R^1$ is an alkylene group having 3 to 9 carbon atoms, incompatibility with domains containing the second structure (polyether structure) represented by formula (2) described below is ensured, allowing for clear phase separation between the matrix and the domains. This more reliably ensures two functions of the polyurethane elastomer: softness and fast recovery from deformation.

Furthermore, when $R^1$ is an alkylene group having a branched structure having 3 to 9 carbon atoms, the intermolecular forces between carbonate groups are appropriately suppressed, preventing the matrix from becoming excessively elastic.

Examples of $R^1$ include $-(CH_2)_m-$ (m = 3 to 9, preferably 6 to 9), $-CH_2C(CH_3)_2CH_2-$, $-CH_2CH(CH_3)CH_2-$, and $-(CH_2)_2CH(CH_3)(CH_2)_2-$. These can be used alone or in combination of at least two.

The number-average molecular weight of the polycarbonate and the polyols described below can be calculated using the hydroxyl value (mg KOH/g) and valence by the following formula. For example, the number-average molecular weight of a polyether polyol with a hydroxyl value of 56.1 mg KOH/g and a valence of 2 can be calculated to be 2000.

$$\text{Number-average molecular weight} = 56.1 \times 1000 \times \text{valence} / \text{hydroxyl value}$$

The elastic modulus of the matrix can be adjusted by, for example, increasing the crosslink density by using a polyisocyanate trimer compound or polymer compound. Typically, increasing the modulus of elasticity increases the micro rubber hardness of a polyurethane elastomer. However, in the present disclosure, a plurality of low-elasticity domains is dispersed within the matrix, preventing excessive increase in hardness.

The domain 32 preferably includes a second structure (polyether structure) represented by formula (2). The domain has at least one polyether structure represented by formula (2), and preferably a plurality thereof. When the domain has a plurality of polyether structures represented by formula (2), the polyether structure can be a repeating

structural unit. Furthermore, the alkylene group having 3 to 6 carbon atoms represented by $R^2$ in the structural unit represented by formula (2) may have either a linear or branched structure, although a branched structure is more preferred.

[Chem 2]

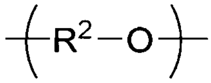 (2)

(In formula (2), $R^2$ represents an alkylene group having 3 to 6 carbon atoms (preferably 3 to 4)).

Polyethers exhibit a low modulus of elasticity due to weak intermolecular forces between ether groups. Therefore, a polyether is preferred as a domain component. Furthermore, when $R^2$ is an alkylene group having 3 to 6 carbon atoms, incompatibility with the matrix having the polycarbonate structure represented by formula (1) is ensured, resulting in clear phase separation between the matrix and the domains, which is preferable.

Examples of $R^2$ include $-(CH_2)_m-$ (m = 3 to 6), $-CH_2CH(CH_3)-$, - $CH_2C(CH_3)_2CH_2-$, $-CH_2CH(CH_3)CH_2-$, and $-(CH_2)_2CH(CH_3)CH_2-$. These can be used alone or in combination of at least two.

The number-average molecular weight of the polyether structure represented by formula (2) is preferably 1000 to 50,000. It is more preferably 1200 to 30,000. A number-average molecular weight of 1000 or greater is preferred because the incompatibility between the domains and the matrix containing the polycarbonate structure represented by Formula (1) is improved, resulting in clear phase separation between the matrix and the domains. Furthermore, a number-average molecular weight of not more than 50,000 is preferred because domain formation is facilitated and the phase separation morphology is stabilized.

The domains preferably have a third structure, and the third structure is preferably formed by addition polymerization of glycerin and at least one selected from the group consisting of ethylene oxide and propylene oxide. That is, the third structure is preferably an addition polymer of glycerin and at least one selected from the group consisting of ethylene oxide and propylene oxide. Where the domains have the third structure, the three-branched structure derived from glycerin forms a three-dimensional crosslinked structure, and even if the terminals are unreacted, they will entangle due to three-dimensional expansion thereof with the portions crosslinked with the matrix, and this will prevent the exudation of components derived from the domains.

The chemical structure of the matrix and domains can be analyzed using, for example, spectroscopic analyzers such as an AFM infrared spectroscopic analyzer, a microscopic infrared spectroscopic analyzer, a microscopic Raman spectroscopic analyzer, or a mass spectrometer.

Method for Producing Polyurethane Elastomer

One example of a method for producing the polyurethane elastomer described above includes the following steps (i) to (iii).

Step (i): a step of reacting a first polyether having at least two isocyanate groups with a first polycarbonate polyol having at least two hydroxyl groups to obtain a urethane reactive emulsifier having at least two hydroxyl groups.

Step (ii): a step of obtaining a dispersion in which droplets containing at least a portion of the urethane reactive emulsifier are dispersed in a second polycarbonate polyol.

Step (iii): a step of preparing a polyurethane elastomer forming mixture, the mixture containing the dispersion obtained in step (ii) and a polyisocyanate having at least two isocyanate groups, and then reacting the urethane reactive emulsifier, the second polycarbonate polyol, and the polyisocyanate in the polyurethane elastomer forming mixture.

The steps of the above production method are explained using FIG. 2.

In step (i), a first polyether 51 having at least two isocyanate groups is mixed with a first polycarbonate polyol 52 having at least two hydroxyl groups. The isocyanate groups and hydroxyl groups in the mixture are reacted in the presence of a catalyst, linking them by urethane bonds to obtain a urethane reactive emulsifier 53 having at least two hydroxyl groups. The urethane reactive emulsifier is a reactive emulsifier having urethane bonds.

In step (ii), the urethane reactive emulsifier 53 obtained in step (i) is dispersed in a second polycarbonate polyol 55. The segments derived from the first polyether 51 contained in the urethane reactive emulsifier 53 are incompatible with the second polycarbonate polyol 55 and form droplets 54. Meanwhile, in the second polycarbonate polyol 55, droplets 54 containing segments derived from the first polyether that constitutes part of the urethane reactive emulsifier are uniformly and stably dispersed through the segments derived from the first polycarbonate polyol 52 contained in the urethane reactive emulsifier 53. As a result, a dispersion is obtained in which droplets 54 containing segments derived from the first polyether 51 of the urethane reactive emulsifier 53 are dispersed in the second polycarbonate polyol 55. For the sake of explanation, steps (i) and (ii) are described separately, but these steps may also be implemented as a continuous series of

steps.

The second polycarbonate polyol 55 in which the droplets 54 are to be dispersed in step (ii) can be the unreacted portion of the first polycarbonate polyol used in step (i) that has not reacted with the first polyether. That is, by using an excess amount of the first polycarbonate polyol relative to the first polyether in step (i), it is possible to obtain the dispersion described in step (ii) in which the urethane reactive emulsifier 53 is dispersed in the excess first polycarbonate polyol, i.e., the second polycarbonate polyol 55. Even when an excess amount of the first polycarbonate polyol is used, additional polycarbonate polyol (second polycarbonate polyol) can be added as a dispersion medium for the urethane reactive emulsifier. In this case, the additional polycarbonate polyol may have the same chemical composition as the first polycarbonate polyol used in step (i) or may have a different chemical composition.

Meanwhile, where the first polycarbonate polyol and the first polyether are reacted in equivalent amounts in step (i) and the first polycarbonate polyol is completely consumed, a dispersion is prepared in step (ii) by using a new polycarbonate polyol as the second polycarbonate polyol. In this case, the polycarbonate polyol used as the second polycarbonate polyol may have the same chemical composition as the first polycarbonate polyol or may have a different chemical composition.

Finally, in step (iii), a polyurethane elastomer forming mixture is prepared that contains the dispersion prepared in step (ii) and the polyisocyanate 56 having at least two isocyanate groups. Next, the terminal hydroxyl groups of the urethane reactive emulsifier 53, the hydroxyl groups of the second polycarbonate polyol 55, and the isocyanate groups of the polyisocyanate 56 in the polyurethane elastomer forming mixture are reacted. This forms a network structure via urethane bonds, thereby curing the polyurethane elastomer forming mixture to obtain a polyurethane elastomer. The polyurethane elastomer 500 thus obtained has a matrix-domain structure in which the domains 32 containing the polyether derived from the first polyether 51 are dispersed in the matrix 31 containing a urethane elastomer having a polycarbonate derived from the first polycarbonate polyol 52 and the second polycarbonate polyol 55. Furthermore, the domains 32 are mainly composed of polyether structures, and components substantially free of crosslinked structures, i.e., liquid components, may be present within the domains. This allows the domains in the polyurethane elastomer to have a low elastic modulus.

Furthermore, the domains are not simply liquid components encapsulated within the matrix; rather, the domains and the matrix are thought to be chemically bonded by urethane bonds at the boundary portions of the domains and the matrix. Therefore, when a load applied to the polyurethane elastomer is released, the recovery of the domains from deformation can be linked to the recovery of the matrix from deformation.

As described above, the almost liquid domains are substantially free from internal crosslinking structure. Therefore, it is difficult for domains that are deformed when a load is applied to a polyurethane elastomer to autonomously recover from deformation. However, in polyurethane elastomers, the domains are thought to be chemically bonded to the matrix at boundary portions with the matrix. This allows the domains to recover from deformation along with the recovery of the matrix from deformation. As a result, stable deformation (amount of deformation) and stable recovery from deformation can be achieved, even when the polyurethane elastomer is repeatedly subjected to loading and unloading.

In above steps (i) and (ii), a polyether, which is inherently difficult to disperse stably and uniformly in a polyol due to low compatibility thereof, can be stably dispersed. Specifically, the first polyether 51 is reacted with the first polycarbonate polyol 52 to produce the urethane reactive emulsifier 53. As a result, in this step, a dispersion is obtained in which polyether segments derived from the first polyether 51 are stably and uniformly dispersed in the second polycarbonate polyol. This facilitates the production of polyurethane elastomers in which domains 32 with high circularity, small sizes on the order of micrometers, and a relatively uniform size distribution are dispersed within the matrix 31.

Another method for mixing materials with low compatibility is exemplified by mixing and dispersing the materials using high shear force. However, this method subjects the polyether to high shear stress, resulting in distorted domain shapes and reduced circularity, and can also lead to nonuniform domain sizes. Furthermore, the dispersion state is unstable, and aggregation of domains progresses over a relatively short period of time. Furthermore, the incompatibility between the polyether and polycarbonate polyol is not ensured. As a result, the phase separation between the matrix and domains of the resulting polyurethane elastomer is unclear. This makes it difficult to obtain the polyurethane elastomer disclosed herein, which provides an elastic body with flexibility and excellent recovery from deformation.

The first polyether has at least two isocyanate groups. Furthermore, the first polyether preferably has a second structure represented by formula (2). The first polyether can be obtained, for example, by reacting a polyether polyol having at least two hydroxyl groups and a second structure represented by formula (2) (corresponding to the "first polyol" in the examples) with a polyisocyanate having at least two isocyanate groups.

Examples of the polyether polyol include alkylene structure-containing polyether polyols such as polypropylene glycol, polytetramethylene glycol, a copolymer of tetrahydrofuran and neopentyl glycol, and a copolymer of tetrahydrofuran and 3-methyltetrahydrofuran, as well as random or block copolymers of these polyalkylene glycols. These can be used alone or in combination of at least two.

Here, using a combination of a bifunctional polyether polyol and a trifunctional polyether polyol as a polyether polyol having at least two hydroxyl groups and a second structure represented by formula (2) is preferable because it suppresses the

exudation of substances derived from domains onto the surface of the molded article of polyurethane elastomer and makes it easier to adjust the D/C within the range of 1.0 to 5.0. The reason for this is explained using FIG. 3.

When a polyether polyol having two hydroxyl groups, a polyether polyol having three hydroxyl groups, and a polyisocyanate having at least two isocyanate groups are used in combination as the polyether polyol, the reaction with the polyisocyanate having at least two isocyanate groups results in a first polyether 51 having two isocyanate groups at its terminal, as well as a first polyether 57 having three isocyanate groups at its terminal.

In step (i), these first polyethers are reacted with the first polycarbonate polyol 52 having at least two hydroxyl groups to produce the urethane reactive emulsifier 53 having at least two hydroxyl groups. The urethane reactive emulsifier 53 thus obtained has a three-dimensional network structure. In the polyurethane elastomer obtained by using such a urethane reactive emulsifier through the subsequent steps (ii) and (iii), the amount of polyol in the domains that is not bound to the matrix can be reduced. For this reason, the combined use of a bifunctional polyether polyol and a trifunctional polyether polyol as the polyether polyol reduces the D value, thereby making it easier to adjust the D/C ratio within the range of 1.0 to 5.0.

Particularly suitable trifunctional polyether polyols are triol-type polypropylene glycol, triol-type polyethylene glycol, and a copolymer of polyethylene oxide and polypropylene oxide, which is a triol-type copolymer. Here, for example, triol-type polypropylene glycol refers to a polypropylene glycol having three hydroxyl groups in the molecule.

Among polyether polyols, amorphous polyether polyols are preferred from the standpoints of incompatibility with the second polycarbonate polyol and the ability to achieve low hardness.

More preferably, the polyether polyol contains at least one selected from polypropylene glycol, a copolymer of tetrahydrofuran and neopentyl glycol, and a copolymer of tetrahydrofuran and 3-methyltetrahydrofuran.

The number-average molecular weight of the polyether polyol is preferably 1000 to 50,000. It is more preferably 1200 to 30,000. A number-average molecular weight of at least 1000 is preferred because the incompatibility with the polycarbonate polyol is ensured, resulting in clear phase separation between the matrix and the domains in the obtained urethane elastomer. Furthermore, a number-average molecular weight of not more than 50,000 is preferred because domain formation is facilitated and the phase separation morphology is stabilized.

Examples of polyisocyanates to be reacted with polyether polyol include pentamethylene diisocyanate, hexamethylene diisocyanate, isophorone diisocyanate, 2,4-tolylene diisocyanate, 2,6-tolylene diisocyanate, xylylene diisocyanate, diphenylmethane diisocyanate, trimer compounds (isocyanurates) or polymeric compounds of these polyisocyanates, allophanate polyisocyanates, biuret polyisocyanates, and aqueous dispersion-type polyisocyanates. These polyisocyanates can be used alone or in combination of at least two.

Among polyisocyanates, bifunctional isocyanates having two isocyanate groups are preferred due to their high compatibility with the first polyether and the ease of adjusting physical properties such as viscosity. More preferably, at least one selected from hexamethylene diisocyanate, isophorone diisocyanate, 2,4-tolylene diisocyanate, 2,6-tolylene diisocyanate, xylylene diisocyanate, and diphenylmethane diisocyanate is included. Among these, xylylene diisocyanate is even more preferred.

In the step for reacting the polyether polyol with the polyisocyanate, the isocyanate index is preferably in the range of 1.2 to 5.0. Having an isocyanate index in this range reduces the amount of components derived from the first polyether that remains without forming a network structure, and makes it possible to suppress the exudation of liquid substances from the polyurethane elastomer. The isocyanate index refers to the value of the ratio ([NCO]/[OH]) of the number of moles of isocyanate groups in the isocyanate compound to the number of moles of hydroxyl groups in the polyol compound.

The first polyether obtained by reacting a polyether polyol with a polyisocyanate has a structure linked via urethane bonds formed by the reaction of hydroxyl groups with isocyanate groups. The number-average molecular weight thereof is preferably 1000 to 50,000, and more preferably 1200 to 30,000.

The first polycarbonate polyol has at least two hydroxyl groups. It is also preferably a polycarbonate polyol having a first structure represented by formula (1). Examples of the first polycarbonate polyol include a reaction product of a polyhydric alcohol with phosgene, and a ring-opening polymerization product of a cyclic carbonate ester (such as an alkylene carbonate).

Examples of polyhydric alcohols include propylene glycol, dipropylene glycol, trimethylene glycol, 1,4-tetramethylene diol, 1,3-tetramethylene diol, 2-methyl-1,3-trimethylene diol, 1,5-pentamethylene diol, neopentyl glycol, 1,6-hexamethylene diol, 3-methyl-1,5-pentamethylene diol, 2,4-diethyl-1,5-pentamethylene diol, glycerin, trimethylolpropane, trimethylolethane, cyclohexanediols (such as 1,4-cyclohexanediol), and sugar alcohols (such as xylitol and sorbitol).

Examples of alkylene carbonates include trimethylene carbonate, tetramethylene carbonate, and hexamethylene carbonate.

The number-average molecular weight of the first polycarbonate polyol is preferably 500 to 10,000. It is more preferably 700 to 8,000. A number-average molecular weight of at least 500 ensures incompatibility with the domains containing the polyether of the second structural unit represented by formula (2), enabling clearer phase separation

between the matrix and the domain. Furthermore, a number-average molecular weight of not more than 10,000 can prevent excessive increase in viscosity in the first polycarbonate polyol.

The second polycarbonate polyol to be used in step (ii) can be any of the polycarbonate polyols listed above for the first polycarbonate polyol. As mentioned above, the first polycarbonate polyol and the second polycarbonate polyol may have the same chemical composition, or they may be different.

The polyisocyanate 56 having at least two isocyanate groups that is to be used in step (iii) can be the same as the polyisocyanates exemplified above as raw materials for the first polyether. These polyisocyanates can be used alone or in combination of at least two.

From the viewpoint of increasing the elastic modulus of the matrix, it is preferable that the polyisocyanate 56 include a polyisocyanate having at least three isocyanate groups, such as a polyisocyanate trimer compound (isocyanurate) or polymeric compound, allophanate-type polyisocyanate, or biuret-type polyisocyanate, among the polyisocyanates exemplified above.

More preferably, the polyisocyanate 56 includes at least one selected from the group consisting of a pentamethylene diisocyanate trimer compound (isocyanurate), a hexamethylene diisocyanate trimer compound (isocyanurate), a diphenylmethane diisocyanate polymeric compound, and polymeric MDI.

Among the above, polymeric MDI are preferred. A polymeric MDI is a mixture of a monomeric MDI and a high-molecular-weight polyisocyanate and is represented by the following formula (A). Preferably, n in formula (A) is from 0 to 4. Commercially available polymeric MDI may be used, examples thereof including Millionate MR series (manufactured by Tosoh Corporation) such as Millionate MR200 (trade name).

[Chem 3]

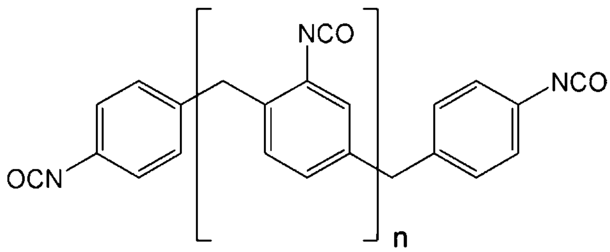

(A)

As the polyisocyanate 56 having at least two isocyanate groups, it is preferable to use a polyisocyanate having at least three isocyanate groups, such as polymeric MDI, in combination with a bifunctional isocyanate having two isocyanate groups. This combination allows for adjustment of the crosslink density of the matrix, making it preferable from the viewpoint of achieving both low hardness and low compression set.

The catalyst may be a conventionally known urethane catalyst or isocyanurate catalyst (isocyanate trimerization catalyst). These may be used alone or in combination.

Examples of urethane catalysts include tin-based urethane catalysts such as dibutyltin dilaurate and stannous octoate, and amine-based urethane catalysts such as triethylenediamine, tetramethylguanidine, pentamethyldiethylenetriamine, diethylimidazole, tetramethylpropanediamine, N,N,N'-trimethylaminoethylethanolamine, 1,4-diazabicyclo[2.2.2]octane-2-methanol, and N,N-dimethylaminohexanol. These may be used alone or in combination. Of these, N,N-dimethylaminohexanol is particularly preferred for obtaining the polyurethane elastomers disclosed herein. Specifically, 1,4-diazabicyclo[2.2.2]octane-2-methanol and N,N-dimethylaminohexanol have hydroxyl groups that can react with isocyanates to reduce amine emissions. It is believed that when the hydroxyl groups react with isocyanates, the urethane catalytic activity of the amine segments decreases. In other words, it is believed that the higher the reactivity of the hydroxyl groups with isocyanates, the lower the activity as a urethane catalyst. Furthermore, N,N-dimethylaminohexanol has a lower reactivity of the hydroxyl groups with isocyanates than 1,4-diazabicyclo[2.2.2]octane-2-methanol, and is believed to be less susceptible to a relative decrease in urethane catalytic activity when used in urethane reaction. Therefore, in step (i), the first polyether 51 having at least two isocyanate groups can be more effectively reacted with the first polycarbonate polyol 52 having at least two hydroxyl groups. As a result, in the polyurethane elastomer obtained in step (iii), the number of urethane bonds at the boundary portion between the domains and the matrix can be increased compared to when 1,4-diazabicyclo[2.2.2]octane-2-methanol is used as the catalyst. Therefore, using N,N-dimethylaminohexanol as a catalyst can further prevent domain components from exuding to the surface of the polyurethane elastomer molded article, and is extremely effective in setting a D/C ratio in the range of 1.0 to 5.0.

In the present disclosure, as described above, in order to reduce the amount D of exudate on the surface of a polyurethane elastomer molded article and adjust the D/C ratio to within the range of 1.0 to 5.0, it is effective to employ at least one means selected from the group consisting of:

using a polyether polyol having two hydroxyl groups and a polyether polyol having three hydroxyl groups in combination as the raw material for the first polyether; and
using N,N-dimethylaminohexanol as the catalyst.

Examples of isocyanurate catalysts include metal oxides such as $Li_2O$ and $(Bu_3Sn)_2O$; hydride compounds such as $NaBH_4$; alkoxide compounds such as $NaOCH_3$, KO-(t-Bu), and borates; amine compounds such as $N(C_2H_5)_3$, $N(CH_3)_2CH_2C_2H_5$, and 1,4-ethylenepiperazine (DABCO); alkaline carboxylate salt compounds such as HCOONa, $Na_2CO_3$, PhCOONa/DMF, $CH_3COOK$, $(CH_3COO)_2Ca$, alkali soaps, and naphthenates; alkaline formate compounds; and quaternary ammonium salt compounds such as $((R)_3$-NR'OH)-OCOR". Here, Bu represents a butyl group, Ph represents a phenyl group, and R, R', and R" represent any alkyl group. Furthermore, examples of catalyst combinations (co-catalysts) that can be used as isocyanurate catalysts include amine/epoxide, amine/carboxylic acid, and amine/alkyleneimide. These isocyanurate catalysts and catalyst combinations may be used alone or in combination.

In the method for producing polyurethane elastomers, a chain extender (a multifunctional low-molecular-weight polyol) may be used as needed. Examples of chain extenders include glycols with a number-average molecular weight of 1000 or less. Examples of such glycols include ethylene glycol (EG), diethylene glycol (DEG), propylene glycol (PG), dipropylene glycol (DPG), 1,4-butanediol (1,4-BD), 1,6-hexanediol (1,6-HD), 1,4-cyclohexanediol, 1,4-cyclohexanedimethanol, xylylene glycol (terephthalyl alcohol), and triethylene glycol.
Furthermore, examples of chain extenders other than glycols include trihydric or higher polyhydric alcohols. Examples of trihydric or higher polyhydric alcohols include trimethylolpropane, glycerin, pentaerythritol, and sorbitol. These may be used alone or in combination.
Additives such as foaming agents, microballoons, pigments, plasticizers, waterproofing agents, antioxidants, conductive agents, UV absorbers, and light stabilizers may also be used as needed.

Polyurethane molded articles include polyurethane elastomers. For example, heat-cured polyurethane elastomers can be used directly as polyurethane molded articles.

Polyurethane molded articles may have a foamed structure obtained by a mechanical froth method, or by foaming with a chemical foaming agent or the addition of microballoons.

Polyurethane molded articles can also be used in applications such as artificial muscles, artificial skin, synthetic leather, robot chucks, shoe soles, insoles, CMP polishing pads, stretchable electronics, flexible electronics, pressure sensors, elastic sensors, soft actuators, power generation elements, speakers, and small pumps.

## Examples

The following examples further illustrate one embodiment of the present disclosure. However, the present disclosure is not limited to the following examples.

### Materials Used

The materials used in the examples and comparative examples are listed below.

### Polyol

[Table 1]

| Polyol | Structure Product name Manufacturer | Number of functional groups | Number of carbon atoms in R1 in formula (1) | Number of carbon atoms in R2 in formula (2) | Mn |
|---|---|---|---|---|---|
| A-1 | Polypropylene glycol PREMINOL S4013F AGC Inc. | 2 | - | 4(branched) | 12,000 |
| A-2 | Polypropylene glycol Uniol D-2000 NOF Corporation | 2 | - | 4(branched) | 2,000 |
| A-3 | Polytetramethylene glycol PTMG2000 Mitsubishi Chemical Corporation | 2 | - | 4(linear) | 2,000 |
| A-4 | Polycarbonate diol Kuraray Polyol C-2090 Kuraray Co., Ltd. | 2 | 6(linear)+ 6(branched) | | 2,000 |

(continued)

| Polyol | Structure Product name Manufacturer | Number of functional groups | Number of carbon atoms in R1 in formula (1) | Number of carbon atoms in R2 in formula (2) | Mn |
|---|---|---|---|---|---|
| A-5 | Polycarbonate diol Kuraray Polyol C-2065N Kuraray Co., Ltd. | 2 | 9(linear)+ 9(branched) | | 2,000 |
| A-6 | Polyester polyol Kuraray Polyol P-2050 Kuraray Co., Ltd. | 2 | - | - | 2,000 |
| A-7 | Polypropylene glycol PREMINOL S3011 AGC Inc. | 3 | - | - | 10,000 |
| A-8 | Polypropylene glycol Actcol EP-950N Mitsui Chemicals, Inc. | 3 | - | - | 5,000 |
| A-9 | Polypropylene glycol PREMINOL 7012 AGC Inc. | 3 | - | - | 10,000 |

In the table, Kuraray Polyol C-2090 (manufactured by Kuraray Co., Ltd.) is a polycarbonate polyol having a number-average molecular weight of 2000, a hydroxyl value of 56.3 mg KOH/g, a structure corresponding to 1,6-hexanediol and a structure corresponding to 3-methyl-1,5-pentanediol. In other words, with regard to the number of carbon atoms of polycarbonate diols and polycarbonate polyols, for example, "6 (linear) + 6 (branched)" indicates that $R^1$ contains both a linear structure with 6 carbon atoms and a branched structure with 6 carbon atoms. Furthermore, Kuraray Polyol P-2050 is a polyester polyol having a structure corresponding to adipic acid and a structure corresponding to 3-methyl-1,5-pentanediol. PREMINOL S3011, Actcol EP-950N, and PREMINOL 7012 are all triol-type polypropylene glycols.

Polyisocyanate

B-1: Xylylene diisocyanate (manufactured by Tokyo Chemical Industry Co., Ltd.)
B-2: Polymeric MDI (product name: Millionate MR-200, manufactured by Tosoh Corporation)

[Curing Catalyst]

C-1: N,N-Dimethylaminohexanol (product name: Kaolizer No. 25, manufactured by Kao Corporation)
C-2: 1,4-Diazabicyclo[2.2.2]octane-2-methanol (product name: RZETA, manufactured by Tosoh Corporation)

Evaluation

The evaluation methods for the Examples and Comparative Examples are described below.

Evaluation 1: Confirmation of Matrix-Domain Structure and Component Analysis

Slices were prepared from the polyurethane elastomer using a microtome to obtain a cubic first molded article with one side measuring 100 μm. Mapping measurements were then performed using a three-dimensional microscopic laser Raman spectrometer (product name: Nanofinder 30, manufactured by Tokyo Instruments Inc.). The measurement mode was EM (Electron Multiplying), and measurements were taken at 60 × 60 points at 500 nm intervals, obtaining an integrated image from 0 $cm^{-1}$ to 400 $cm^{-1}$. The obtained integrated image confirmed the presence of a matrix in the elastic layer and a plurality of domains dispersed within the matrix. Furthermore, the matrix and domains were clearly phase-separated.

Next, Raman spectra were measured for the matrix and domain portions from the integrated image. Measurements were performed using a Nd:$YVO_4$ light source (wavelength 532 nm), a laser intensity of 240 μW, a 100x objective lens, a diffraction grating of 300 gr/mm, a pinhole diameter of 100 μm, a 30-sec exposure time, and a single integration. The Raman spectrum obtained confirmed that the matrix contained a structure derived from polycarbonate urethane and the domains contained a structure derived from polypropylene glycol.

Evaluation 2: Number of Domains, Sphere-Equivalent Diameter, and Total Volume Ratio

First, a cubic first molded article with one side measuring 100 μm was obtained in the same manner as in Evaluation 1. A FIB-SEM (manufactured by FEI Inc.) was used to acquire three-dimensional stereo images of the first molded article at 60 nm intervals. The obtained images were then analyzed using 3D visualization and analysis software Avizo (registered trademark, manufactured by FEI., Inc.) to calculate the number N of domains, the arithmetic mean value Da of the sphere-equivalent diameters of the domains, and the proportion V of the total volume of the domains in the first molded article.

Evaluation 3: Measurement of Parameters Indicating Viscoelasticity

First, a cubic first molded article with one side measuring 100 μm was obtained as in Evaluation 1. A slice was prepared from the first molded article using a microtome. Viscoelasticity images were then measured using a scanning probe microscope (product name: S-Image, manufactured by SII Nanotechnology, Inc.). The measurement mode of the viscoelasticity image was VE-DFM. The cantilever used was "SI-DF3" (product name, manufactured by Hitachi High-Tech Science Corporation, spring constant = 1.9 N/m). The scanning frequency was 0.5 Hz.

From the obtained viscoelasticity image, parameters indicating the viscoelasticity terms were calculated for each observation region, 10 for the matrix and 10 for the domain. The arithmetic mean values thereof were used to determine parameter A (mV) indicating the viscoelasticity term of the domains, and parameter B (mV) indicating the viscoelasticity term of the matrix.

Evaluation 4: Measurement of Micro Rubber Hardness

First, a 2 mm thick sheet-shaped polyurethane elastomer molded article was cut with scissors to obtain a cubic second molded article with one side measuring 2 mm.

The micro rubber hardness of the second molded article was measured using a micro rubber hardness tester (product name: MD-1capa, manufactured by Kobunshi Keiki Co., Ltd.). The second molded article was allowed to stand in an environment at 23°C for at least 24 h, and measurements were taken using a measuring device placed in the same environment. A Type A indenter (height 0.50 mm, diameter 0.16 mm, cylindrical, outer diameter 4 mm, inner diameter 1.5 mm) was used, and the measurement mode was a peak hold mode.

Evaluation 5: Measurement of Recovery from Deformation

First, a 2 mm thick sheet-shaped polyurethane elastomer was cut with scissors to obtain a cubic second molded article with one side measuring 2 mm.

The measurement point was set approximately at the center of freely selected one surface of the second molded article, and an indentation test was performed at a temperature of 23°C using a nanoindenter (product name: Fischerscope HM2000, manufactured by Fischer Instruments, a square pyramidal Vickers indenter with an opposing angle of 136°). The Vickers indenter was pressed into the second molded article at a loading rate of 10 mN/30 sec, and the load of 10 mN was maintained for 60 sec. The load was then released at 10 mN/30 sec, and the value of the strain 5 sec after the load was released was measured to measure recovery from deformation.

Evaluation 6: Measurement of Solvent Extraction Ratio C

First, a 2 mm thick sheet-shaped polyurethane elastomer molded article was prepared using a mold for preparing 2 mm thick sheets. This sheet was cut with scissors into a piece 25 mm in length, 10 mm in width, and 2 mm in thickness to obtain the third molded article. The third molded article was subjected to Soxhlet extraction at an extraction temperature of 80°C for an extraction time of 4 h in accordance with Japanese Industrial Standard (JIS) K6229:2015 by using acetone as an extraction solvent, and the ratio of the mass of resulting extract E1 to the mass of the third molded article was calculated as solvent extraction ratio C (% by mass).

Evaluation 7: Measurement of Solvent Extraction Ratio D of Powder

First, a 2 mm thick sheet-shaped polyurethane elastomer molded article was cut with scissors into a piece 25 mm in length, 10 mm in width, and 2 mm in thickness to obtain the third molded article. The third molded article was sandwiched between two sheets of Kiriyama funnel filter paper 5B, which was then sandwiched between two degreased aluminum sheets. The product was pulverized at 10 MPa for 1 min using a 50-ton press (product name: PEF 5041, manufactured by Kansai Roll Co., Ltd.) preheated to 130°C to obtain a powder.

To determine the size of the powder, the particle size distribution was measured using a laser diffraction/scattering particle size distribution analyzer (product name: Partica LA-960V2, manufactured by Horiba, Ltd.) equipped with a dry measurement unit, and the particle size showing the maximum peak (mode diameter) was determined.

Furthermore, the two sheets of Kiriyama funnel filter paper sandwiching the pulverized third molded article were folded and placed in a Soxhlet cylindrical filter paper. Extract E2 was obtained in the same manner as for solvent extraction ratio C above, and the solvent extraction ratio D (% by mass) of the powder was determined.

Evaluation 8: Measurement of Number-Average Molecular Weight of Extract E2

Extract E2 obtained by solvent extraction of powder was collected, dissolved in THF, and measured using the following measurement device and measurement conditions.

Measurement device: HLC-8320GPC (product name, manufactured by Tosoh Corporation)
Column: TSKgel SuperMultipore HZ-N (product name, manufactured by Tosoh Corporation) x 2
Solvent: THF
Temperature: 40°C
Flow velocity: 0.35 mL/min

Measurement was performed using an RI (refractive index) detector. Furthermore, a calibration curve was created using the following materials as standard samples. TSK standard polystyrene (product names: "A-1000," "A-2500," "A-5000," "F-1," "F-2," "F-4," "F-10," "F-20," "F-40," "F-80," and "F-128," manufactured by Tosoh Corporation) was used. Based on this calibration curve, the number-average molecular weight of extract E2 was calculated from the retention time of the measurement sample obtained.

Evaluation 9: Measurement of Viscosity of Extract E2

A total of 10 μL of extract E2 obtained in the measurement of the solvent extraction ratio D of powder was collected. The viscosity of the collected extract E2 was then measured at a temperature of 25°C and a shear rate of 1 (1/s) using an ultra-micro sample viscometer (product name: m-VROC, manufactured by RheoSense, Inc.), and the result was taken as the viscosity of extract E2.

Evaluation 10: Measurement of Abrasion Resistance

Abrasion resistance was measured under the following conditions (1) to (6) on the surface in the thickness direction of a sheet-shaped abrasion test specimen composed of the polyurethane elastomer and measuring 30 mm in length, 30 mm in width, and 2 mm in thickness by using a ball-on-disk friction and wear tester (product name: HEIDON Type: 20, manufactured by Shinto Chemical Co., Ltd.) in accordance with JIS R1613:2010.

(1) Ball

Material: stainless steel
Diameter: 10 mm

(2) Load: 100 g
(3) Environment: temperature 23°C, 50% RH
(4) Time: 60 min
(5) Sliding circle diameter: 10 mm
(6) Rotational speed of a disk on which the test specimen is placed: 300 rpm.

The abrasion test was performed in the following manner. First, the mass of the abrasion test specimen was measured. Next, the abrasion test specimen was fixed with a double-sided tape so that the center of the abrasion test specimen was positioned approximately at the center of the sliding disk of the ball-on-disk friction and wear tester (product name: HEIDON Type: 20, manufactured by Shinto Chemical Co., Ltd.). At this time, the surface in the thickness direction of the abrasion test specimen was placed in contact with the sliding disk. Next, an indenter consisting of the above-mentioned ball was pressed against the center of the abrasion test specimen with a load of 100 g, and the abrasion test specimen was rotated and slid for 60 min with a sliding circle diameter of 10 mm and a rotation speed of 300 rpm. After 60 min, the test was stopped, the wear debris and double-sided tape were removed, and the mass of the test specimen was measured. The mass loss rate (% by mass) was calculated from the mass of the test specimen before and after the abrasion test.

Example 1

Preparation Example of Urethane Prepolymer UP1

A total of 21.5 parts by mass of polyol A-1 as a polyether polyol (first polyol) having at least two hydroxyl groups and a second structure represented by formula (2), 0.4 parts by mass of polyisocyanate B-1 as a first polyisocyanate, and 500 ppm of curing catalyst C-1 were mixed and heated at 100°C for 24 h to synthesize a polyol (first polyether) having at least two isocyanate groups. This was mixed with 50.2 parts by mass of polyol A-4 as a third polyol (first polycarbonate polyol)) followed by heating at 100°C for 4 h to produce urethane prepolymer (urethane reactive emulsifier) UP1 (step (i)).

Preparation Example of Urethane Elastomer Molded Article No. 1

A total of 72.1 parts by mass of urethane prepolymer UP1, 2.2 parts by mass of B-1 as a second polyisocyanate, and 3.8 parts by mass of B-2 as a third polyisocyanate were mixed and stirred for 2 min to reach a homogeneous state at a revolution speed of 1600 rpm using a planetary-type vacuum agitation/defoaming mixer (product name: V-mini 300, manufactured by EME Inc.) (steps (ii) and (iii)). This produced a polyurethane elastomer forming mixture for the present example. The polyurethane elastomer forming mixture was then preheated to 130°C and poured into a mold for preparation of a 2 mm-thick sheet. The mold was thinly coated with a mold release agent. Subsequent heating to 130°C for 2 h caused curing (step (iii)). The cured product was then removed from the mold and post-cured at 80°C for two days to obtain a 2 mm thick sheet-shaped polyurethane elastomer molded article No. 1.

Example 2

Preparation Example of Urethane Prepolymer UP2

A total of 15.0 parts by mass of polyol A-1 as the first polyol, 6.4 parts by mass of polyol A-7 as the second polyol, 0.5 parts by mass of polyisocyanate B-1 as the first polyisocyanate, and 500 ppm of curing catalyst C-1 were homogeneously mixed and heated at 100°C for 24 h to synthesize a polyol (first polyether) having a terminal isocyanate group. This was mixed with 50.2 parts by mass of polyol A-4 as the third polyol (first polycarbonate polyol)) followed by heating at 100°C for 4 h to produce urethane prepolymer (urethane reactive emulsifier) UP2 (step (i)).

Preparation Example of Urethane Elastomer Molded Article No. 2

Polyurethane elastomer molded article No. 2 was obtained in the same manner as in Example 1, except that 72.1 parts by mass of urethane prepolymer UP2, 2.1 parts by mass of B-1 as the second polyisocyanate, and 3.8 parts by mass of B-2 as the third polyisocyanate were used.

Examples 3 and 4

Polyurethane elastomer molded article No. 3 and polyurethane elastomer molded article No. 4 were prepared in the same manner as in Example 2, except that the materials shown in Table 2 were used in the blending amounts shown in Table 2.

Examples 5 to 9 and Comparative Examples 1 and 2

Polyurethane elastomer molded articles No. 5 to 9 and polyurethane elastomer molded articles Nos. C1 and C2 were prepared in the same manner as in Example 1, except that the materials shown in Table 2 were used in the blending amounts shown in Table 2.

Comparative Example 3

Preparation Example of Urethane Elastomer Molded Article No. C3

A total of 87.8 parts by mass of polyol A-5 as the first polyol, 4.9 parts by mass of B-1 as the first polyisocyanate, 7.3 parts by mass of B-2 as the second polyisocyanate, and 500 ppm of curing catalyst C-1 were mixed and stirred for 2 min at a revolution speed of 1600 rpm using a planetary vacuum agitation/defoaming mixer to reach a homogeneous state, thereby producing a polyurethane elastomer forming mixture. Next, polyurethane elastomer molded article No. C3 was obtained in the same manner as in Example 1, except that this polyurethane elastomer forming mixture was used.

Comparative Example 4

Preparation Example of Urethane Elastomer Molded Article No. C4

A total of 23.5 parts by mass of polyol A-2 as the first polyol, 43.6 parts by mass of polyol A-6 as the second polyol, 3.8 parts by mass of B-1 as the first polyisocyanate, 5.7 parts by mass of B-2 as the second polyisocyanate, and 500 ppm of curing catalyst C-1 were mixed and stirred for 2 min at a revolution speed of 1600 rpm using a planetary vacuum agitation/defoaming mixer to reach a homogeneous state, thereby producing a polyurethane elastomer forming mixture. Polyurethane elastomer molded article No. C4 was then obtained in the same manner as in Example 1, except for using this polyurethane elastomer forming mixture.

[Table 2]

| | Synthesis of polyol having a terminal isocyanate group | | | | | | | | Preparation of urethane prepolymer | | | Synthesis of urethane elastomer | | | | | | |
|---|---|---|---|---|---|---|---|---|---|---|---|---|---|---|---|---|---|---|
| | First polyol | | Second polyol | | First polyisocyanate | | Curing catalyst | | Third polyol | | Urethane prepolymer | Urethane prepolymer | | Second polyisocyanate | | Third polyisocyanate | | Urethane elastomer |
| | Type | parts by mass | Type | parts by mass | Type | parts by mass | Type | ppm | Type | parts by mass | Type | Type | parts by mass | Type | parts by mass | Type | parts by mass | No. |
| Example 1 | A-1 | 21.5 | - | - | B-1 | 0.4 | C-1 | 500 | A-4 | 50.2 | UP1 | UP1 | 72.1 | B-1 | 2.2 | B-2 | 3.8 | No.1 |
| Example 2 | A-1 | 15.0 | A-7 | 6.4 | B-1 | 0.5 | C-1 | 500 | A-4 | 50.2 | UP2 | UP2 | 72.1 | B-1 | 2.1 | B-2 | 3.8 | No.2 |
| Example 3 | A-1 | 15.0 | A-8 | 6.4 | B-1 | 0.7 | C-1 | 500 | A-4 | 50.1 | UP3 | UP3 | 72.2 | B-1 | 1.9 | B-2 | 3.8 | No.3 |
| Example 4 | A-1 | 14.9 | A-9 | 6.4 | B-1 | 0.5 | C-2 | 500 | A-4 | 49.7 | UP4 | UP4 | 71.5 | B-1 | 2.5 | B-2 | 4.4 | No.4 |
| Example 5 | A-3 | 23.5 | - | - | B-1 | 2.5 | C-1 | 500 | A-5 | 43.7 | UP5 | UP5 | 69.7 | B-1 | 0.2 | B-2 | 4.0 | No.5 |
| Example 6 | A-1 | 24.2 | - | - | B-1 | 0.4 | C-1 | 500 | A-6 | 45.0 | UP6 | UP6 | 69.6 | B-1 | 2.1 | B-2 | 3.7 | No.6 |
| Example 7 | A-1 | 26.8 | - | - | B-1 | 0.5 | C-1 | 500 | A-4 | 40.3 | UP7 | UP7 | 67.6 | B-1 | 1.8 | B-2 | 3.4 | No.7 |
| Example 8 | A-1 | 29.3 | - | - | B-1 | 0.5 | C-1 | 500 | A-4 | 35.8 | UP8 | UP8 | 65.6 | B-1 | 1.5 | B-2 | 3.0 | No.8 |
| Example 9 | A-1 | 18.4 | - | - | B-1 | 0.3 | C-1 | 500 | A-4 | 55.2 | UP9 | UP9 | 73.9 | B-1 | 2.8 | B-2 | 4.6 | No.9 |
| Comparative Example 1 | A-1 | 21.5 | - | - | B-1 | 0.4 | C-2 | 500 | A-4 | 50.2 | UP10 | UP10 | 72.1 | B-1 | 2.2 | B-2 | 3.8 | No.C1 |
| Comparative Example 2 | A-1 | 21.5 | - | - | B-1 | 0.4 | C-2 | 750 | A-4 | 50.2 | UP11 | UP11 | 72.1 | B-1 | 1.7 | B-2 | 3.8 | No.C2 |

[Table 3]

| | First polyol | | Second polyol | | Curing catalyst | | First polyisocyanate | | Second polyisocyanate | | Urethane elastomer |
|---|---|---|---|---|---|---|---|---|---|---|---|
| | Type | Parts by mass | Type | Parts by mass | Type | ppm | Type | Parts by mass | Type | Parts by mass | No. |
| Comparative example 3 | A-5 | 87.8 | - | - | C-1 | 500 | B-1 | 4.9 | B-2 | 7.3 | No.C3 |
| Comparative example 4 | A-2 | 23.5 | A-6 | 43.6 | C-1 | 500 | B-1 | 3.8 | B-2 | 5.7 | No.C4 |

Evaluation results for the polyurethane elastomers of Examples 1 to 9 and Comparative Examples 1 to 4 are shown in Table 4.

[Table 4]

| | Evaluation 1 | | | Evaluation 2 | | | Evaluation 3 | | Evaluation 4 | Evaluation 5 | Evaluation 6 | Evaluation 7 | - | Evaluation 8 | Evaluation 9 | Evaluation 10 |
|---|---|---|---|---|---|---|---|---|---|---|---|---|---|---|---|---|
| | Presence of phase separation | Matrix component | Domain components | Number of domains | Arithmetic average value of sphere-equivalent diameter of domains Da | Proportion of total volume of domains V | Parameter A indicating viscoelasticity term | Parameter B indicating viscoelasticity term | Micro rubber hardness | Recovery from deformation | Solvent extraction ratio C | Solvent extraction ratio of powder D | D/C | Number-average molecular weight of extract E2 | Viscosity of extract E2 | Abrasion resistance |
| | - | - | - | [Number] | [μm] | [%] | [mV] | [mV] | [-] | [μm] | [% by mass] | [% by mass] | [-] | [-] | [mPa·s] | [% by mass] |
| Example 1 | Yes | PC | PPG | 16482 | 3.5 | 37 | 100 | 250 | 35 | 0.6 | 2.3 | 5.6 | 2.4 | 15500 | 6458 | 01 |
| Example 2 | Yes | PC | PPG,F3 | 6707 | 45 | 32 | 100 | 250 | 37 | 0.6 | 2.4 | 5.0 | 2.1 | 14000 | 4667 | 0.1 |
| Example 3 | Yes | PC | PPG,F3 | 3816 | 5.7 | 37 | 80 | 280 | 40 | 0.6 | 2.3 | 49 | 21 | 12000 | 3750 | 0.1 |
| Example 4 | Yes | PC | PPG,F3 | 28711 | 28 | 33 | 100 | 250 | 38 | 0.6 | 2.4 | 5.7 | 2.4 | 14500 | 5179 | 0.1 |
| Example 5 | Yes | PC | PTMG | 70117 | 2.1 | 34 | 80 | 280 | 40 | 0.6 | 2.5 | 6.0 | 2.4 | 3000 | 1304 | 0.2 |
| Example 6 | Yes | PE | PPG | 3132 | 63 | 41 | 100 | 250 | 35 | 1.0 | 3.0 | 7.0 | 2.3 | 15400 | 5704 | 0.3 |
| Example 7 | Yes | PC | PPG | 1218 | 8.7 | 42 | 80 | 210 | 27 | 0.7 | 3.1 | 10.5 | 3.4 | 15300 | 7650 | 2.0 |
| Example 8 | Yes | PC | PPG | 704 | 10.1 | 38 | 60 | 210 | 23 | 1.0 | 35 | 17.0 | 49 | 15500 | 6200 | 120 |
| Example 9 | Yes | PC | PPG | 76304 | 2.1 | 37 | 100 | 280 | 50 | 0.7 | 2.3 | 4.3 | 1.9 | 15000 | 4688 | 0.1 |
| Comparative Example 1 | Yes | PC | PPG | 21258 | 3.3 | 40 | 100 | 250 | 35 | 0.5 | 2.7 | 15.0 | 5.6 | 15000 | 6522 | 0.1 |
| Comparative Example 2 | Yes | PC | PPG | 4247 | 5.5 | 37 | 110 | 280 | 52 | 0.5 | 2.3 | 10.0 | 4.3 | 15500 | 5345 | 0.1 |
| Comparative Example 3 | No | PC | - | - | - | - | - | - | 56 | 0.5 | 2.1 | 2.3 | 1.1 | 2300 | 1150 | 18.0 |
| Comparative Example 4 | No | PPG | - | - | - | - | - | - | 26 | 1.0 | 5.1 | 5.5 | 11 | 12000 | 4286 | 30.0 |

In the table, PPG indicates a structure derived from polypropylene glycol, PTMG indicates a structure derived from polytetramethylene glycol, PC indicates a structure derived from polycarbonate urethane, PE indicates a structure derived from polyester urethane, and F3 indicates an addition polymer of glycerin and at least one selected from the group consisting of ethylene oxide and propylene oxide.

Polyurethane elastomer molded article No. 1 of Example 1 exhibited a significantly lower solvent extraction ratio D of the pulverized material than polyurethane elastomer molded article No. C1 obtained in Comparative Example 1, which differed only in the catalyst used. Furthermore, polyurethane elastomer molded article No. C2 obtained in Comparative Example 2, which used a larger amount of catalyst than in Comparative Example 1, exhibited an improved solvent extraction ratio D of the pulverized material, but exhibited increased micro rubber hardness. Polyurethane elastomer molded articles Nos. C3 and C4 obtained in Comparative Examples 3 and 4, which did not have a domain structure, exhibited a D/C ratio close to 1, but exhibited significantly reduced abrasion resistance compared to Example 1 and other examples.

Furthermore, polyurethane elastomer molded article No. 2 of Example 2 and polyurethane elastomer molded article No. 3 of Example 3 further contained, in the domains thereof, a structure that is an addition polymer of glycerin and at least one selected from the group consisting of ethylene oxide and propylene oxide. Therefore, the three-branched structure derived from glycerin increased the number of urethane bonds at the boundary portions between the matrix and the domains, thereby making it possible to further suppress the exudation of domain-derived components to the surface of the polyurethane elastomer molded article. Polyurethane elastomer molded article No. 4 of Example 4 used the same curing catalyst as in Comparative Example 1, but further contained, in the domains thereof, a structure that is an addition polymer of glycerin and at least one selected from the group consisting of ethylene oxide and propylene oxide. This enabled the powder solvent extraction ratio D to be equivalent to that of Example 1.

The present disclosure is not limited to the above-described embodiments, and various changes and modifications are possible without departing from the spirit and scope of the present invention. Therefore, the following claims are appended to clarify the scope of the present disclosure. The present application claims priority based on Japanese Patent Application No. 2023-138464, filed August 28, 2023, and Japanese Patent Application No. 2024-134221, filed August 9, 2024, the entire contents of which are incorporated herein by reference.

[Reference signs list]

3: polyurethane molded article, 31: matrix, 32: domain

## Claims

**1.** A polyurethane elastomer having a matrix and a plurality of domains dispersed within the matrix, wherein

in a first molded article composed of the polyurethane elastomer and having a cubic shape with one side measuring 100 μm,
the number N of the domains comprised is 10 to 77,000;
an arithmetic mean value Da of sphere-equivalent diameters of the domains is 1.0 to 30.0 μm;
a proportion V of a total volume of the domains in the first molded article is 15 to 45% by volume;
in a cross section parallel to one surface of the first molded article, a relationship between parameter A indicating a viscoelasticity term of the domains and parameter B indicating a viscoelasticity term of the matrix, as measured in a viscoelastic image, taken with a scanning probe microscope, is $A < B$;
a micro rubber hardness, at a temperature of 23°C, of a second molded article composed of the polyurethane elastomer is 20 to 50 degrees,
in an indentation test of the second molded article using a nanoindenter at a temperature of 23°C, when a Vickers indenter is pressed into the second molded article at a loading rate of 10 mN/30 sec, a load of 10 mN is maintained for 60 sec, and then the load is released, a strain 5 sec after the load is released is not more than 1.0 μm;
when a third molded article composed of the polyurethane elastomer is subjected to Soxhlet extraction at an extraction temperature of 80°C for an extraction time of 4 h in accordance with Japanese Industrial Standard (JIS) K6229:2015 by using acetone as an extraction solvent, and a ratio of a mass of a resulting extract E1 to a mass of the third molded article is taken as C (% by mass), and
when a powder of the third molded article with a mode diameter of less than 1 μm is subjected to Soxhlet extraction at an extraction temperature of 80°C for an extraction time of 4 h in accordance with Japanese Industrial Standard (JIS) K6229:2015 by using acetone as an extraction solvent, and a ratio of a mass of a resulting extract E2 to a mass of the powder is taken as D (% by mass), D/C is 1.0 to 5.0.

**2.** The polyurethane elastomer according to claim 1, wherein a number-average molecular weight of the extract E2 is 2000 to 100,000.

**3.** The polyurethane elastomer according to claim 1 or 2, wherein a viscosity of the extract E2 is not more than 10,000 mPa·s.

**4.** The polyurethane elastomer according to any one of claims 1 to 3, wherein
the polyurethane elastomer has a first structure represented by a following formula (1) and a second structure represented by a following formula (2), and the matrix comprises the first structure and the domains comprises the second structure:

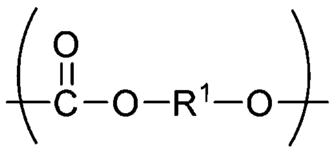 (1)

in formula (1), $R^1$ represents an alkylene group having 3 to 12 carbon atoms;

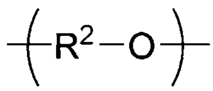 (2)

in formula (2), $R^2$ represents an alkylene group having 3 to 6 carbon atoms.

**5.** The polyurethane elastomer according to claim 4, wherein

the domains have a third structure, and
the third structure is an addition polymer of glycerin and at least one selected from the group consisting of ethylene oxide and propylene oxide.

**6.** The polyurethane elastomer according to any one of claims 1 to 5, wherein
when a ball-on-disk abrasion test conforming to JIS R1613:2010 is conducted under following conditions (1) to (6) on a surface in a thickness direction of a sheet-shaped abrasion test specimen composed of the polyurethane elastomer and measuring 30 mm in length, 30 mm in width, and 2 mm in thickness, a mass loss rate of the abrasion test specimen is not more than 10.0% by mass:

(1) Ball

Material: stainless steel
Diameter: 10 mm

(2) Load: 100 g
(3) Environment: temperature 23°C, 50% RH
(4) Time: 60 min
(5) Sliding circle diameter: 10 mm
(6) Rotational speed of a disk on which the abrasion test specimen is placed: 300 rpm.

**7.** A polyurethane molded article comprising the polyurethane elastomer according to any one of claims 1 to 6.

**8.** The polyurethane molded article according to claim 7, wherein the polyurethane molded article has a foam structure.

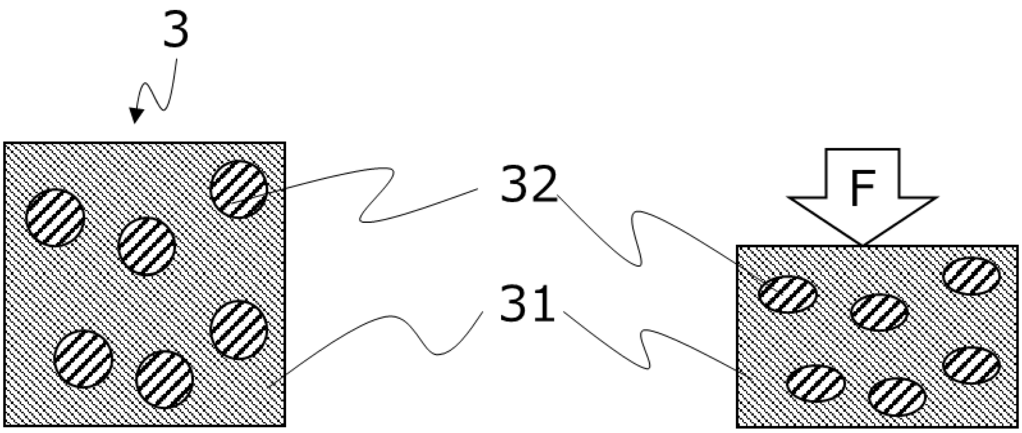


FIG. 1A

FIG. 1B

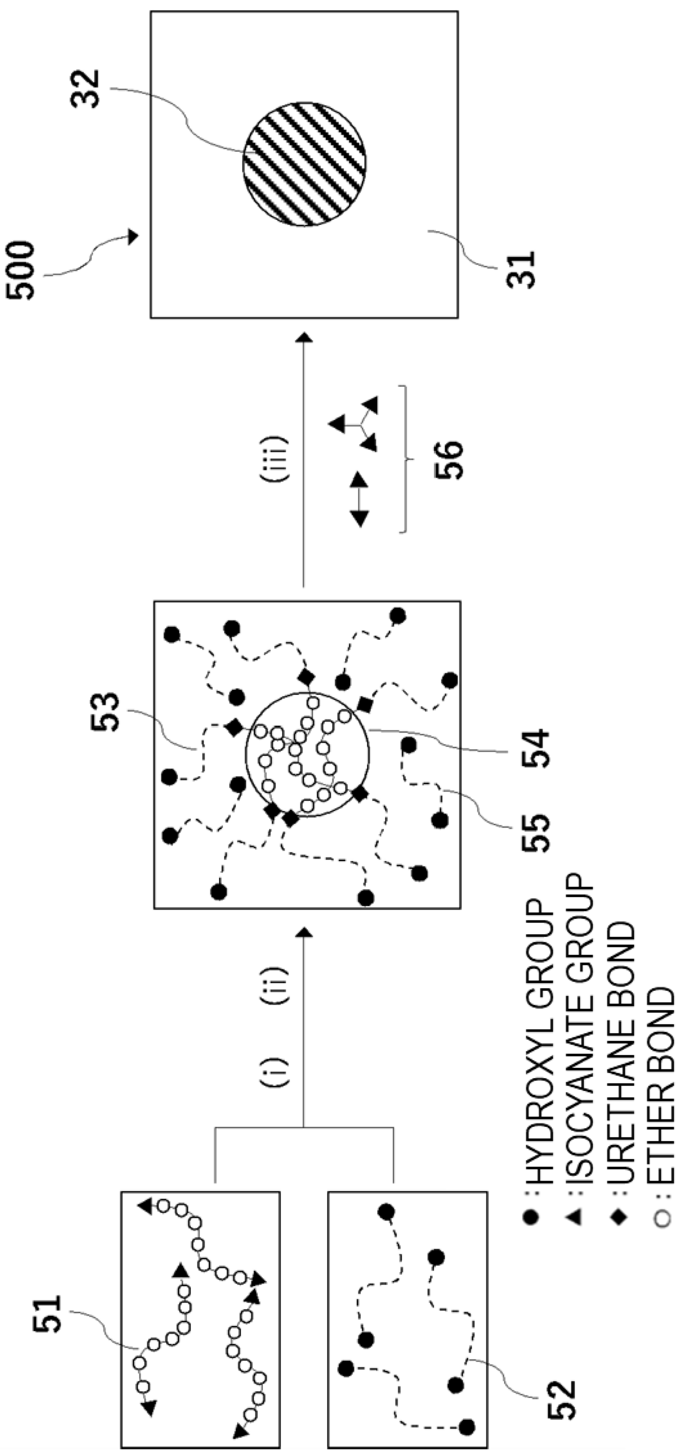
500
32
31
(iii)
56
53
54
55
(i)
(ii)
51
52
●: HYDROXYL GROUP
▲: ISOCYANATE GROUP
◆: URETHANE BOND
○: ETHER BOND

FIG. 2

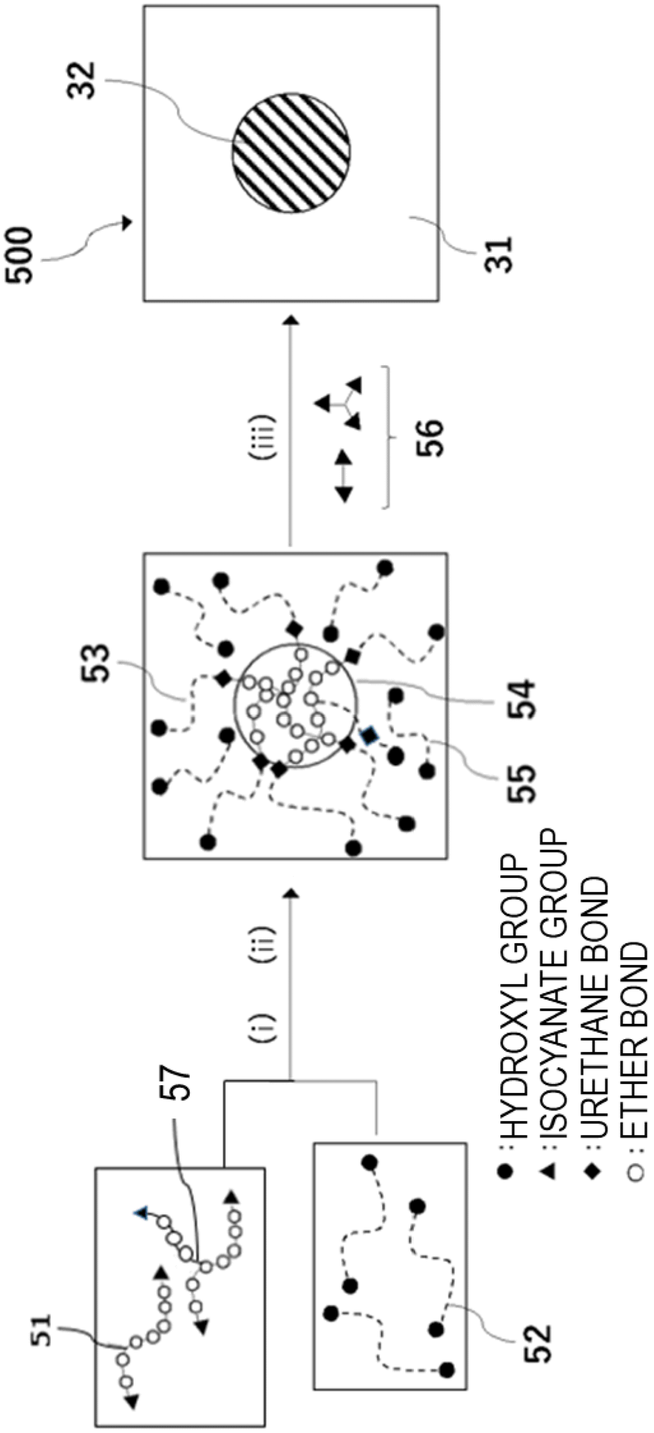
500
32
31
(iii)
56
53
54
55
(i)
(ii)
57
51
52
● :HYDROXYL GROUP
▲ :ISOCYANATE GROUP
◆ :URETHANE BOND
○ : ETHER BOND

FIG. 3

**INTERNATIONAL SEARCH REPORT**

International application No.
**PCT/JP2024/030451**

**A. CLASSIFICATION OF SUBJECT MATTER**

***C08G 18/40***(2006.01)i; ***C08G 18/44***(2006.01)i; ***C08G 18/48***(2006.01)i; *C08G 101/00*(2006.01)n
FI: C08G18/40; C08G18/44; C08G18/48; C08G18/40 009; C08G101:00

According to International Patent Classification (IPC) or to both national classification and IPC

**B. FIELDS SEARCHED**

Minimum documentation searched (classification system followed by classification symbols)

C08G18/40; C08G18/44; C08G18/48; C08G101/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2020-90554 A (TOSOH CORP.) 11 June 2020 (2020-06-11) | 1-8 |
| A | JP 2022-168829 A (CANON KABUSHIKI KAISHA) 08 November 2022 (2022-11-08) | 1-8 |
| A | WO 2022/025267 A1 (CANON KABUSHIKI KAISHA) 03 February 2022 (2022-02-03) | 1-8 |
| A | CN 114149556 A (NANSTAXITTON CHEMICAL CO., LTD.) 08 March 2022 (2022-03-08) | 1-8 |
| A | US 2021/0380751 A1 (BASF SE) 09 December 2021 (2021-12-09) | 1-8 |
| A | CN 114149560 A (FUJIAN HUFFI NEW MATERIALS CO., LTD.) 08 March 2022 (2022-03-08) | 1-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 October 2024** | **29 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/030451**

| Patent document cited in search report | Publication date (day/month/year) | Patent family member(s) | Publication date (day/month/year) |
|---|---|---|---|
| JP 2020-90554 A | 11 June 2020 | (Family: none) | |
| JP 2022-168829 A | 08 November 2022 | US 2024/0043685 A1<br>EP 4332138 A1<br>CN 117203257 A | |
| WO 2022/025267 A1 | 03 February 2022 | US 2023/0159692 A1<br>EP 4190834 A1<br>CN 116057096 A | |
| CN 114149556 A | 08 March 2022 | (Family: none) | |
| US 2021/0380751 A1 | 09 December 2021 | EP 3870652 A1<br>CN 112930374 A | |
| CN 114149560 A | 08 March 2022 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022168829 A
- JP 2023138464 A
- JP 2024134221 A